# EUROPEAN PATENT SPECIFICATION

(11) **EP 2 178 380 B1**
(45) Date of publication and mention of the grant of the patent: **17.05.2017**
(21) Application number: 08775182.2
(22) Date of filing: 17.07.2008
(51) Int. Cl.: A01N 65/20, A01P 3/00, A01P 1/00

(54) **A PROCESS FOR THE PRODUCTION OF A STORAGE STABLE FUNGICIDAL EXTRACT OF GLYCYRRHIZA GLABRA FOR THE CONTROL OF PHYTOPATHOGENIC FUNGI AND OTHER PLANT DISEASES**
VERFAHREN ZUR HERSTELLUNG EINES LAGERFÄHIGEN FUNGIZIDEN EXTRAKTS VON GLYCYRRHIZA GLABRA FÜR DIE BEKÄMPFUNG VON PHYTOPATHOGENEN PILZEN UND ANDEREN PFLANZENKRANKHEITEN
PROCÉDÉ DE PRODUCTION D'UN EXTRAIT FONGICIDE DE<I>GLYCYRRHIZA GLABRA</I>STABLE AU STOCKAGE POUR LA LUTE CONTRE DES CHAMPIGNONS PHYTOPATHOGÈNES ET D'AUTRES MALADIES DE PLANTES

(30) Priority: 18.07.2007 GR 20070100461
(43) Date of publication of application: 28.04.2010
(73) Proprietor: Trifolio-M GmbH, 35633 Lahnau (DE)
(72) Inventor: KONSTANTINIDOU-DOLTSINIS, Stavroula, GR-26442 Patras (GR); SCHMITT, Annegret, 63329 Egelsbach (DE); CERGEL, Sylvia, 35394 Giessen (DE); KLEEBERG, Hubertus, 35633 Lahnau (DE); RUNTE, Julia, 35844 Wetzlar (DE)
(74) Representative: advotec.
(86) International application number: PCT/EP2008/059402
(87) International publication number: WO 2009/010567

(56) References cited:
- JP-A- 2006 298 877
- MITSCHER, L.A.; PARK, Y.H.; CLARK, D.: "Antimicrobial Agents from Higher Plants. Antimicrobial Isoflavanoids and Related Substances from Glycyrrhiza Glabra L. Var. Typica" JOURNAL OF NATURAL PRODUCTS, vol. 43, no. 2, 1 March 1980 (1980-03-01), pages 259-269, XP002543862 US
- HIROAKI HAYASHI ET AL: "Organ specific localization of flavonoids in glycyrrhiza glabra L", PLANT SCIENCE, ELSEVIER IRELAND LTD, IE, vol. 116, no. 2, 1 January 1996 (1996-01-01), pages 233-238, XP002969541, ISSN: 0168-9452, DOI: 10.1016/0168-9452(96)04387-7
- HIROSHI FUKUI ET AL: "Two Antimicrobial Flavanones from the Leaves of Glycyrrhiza glabra", CHEMICAL AND PHARMACEUTICAL BULLETIN, PHARMACEUTICAL SOCIETY OF JAPAN, JP, vol. 36, no. 10, 1 January 1988 (1988-01-01), pages 4174-4176, XP009158158, ISSN: 0009-2363
- Louis Shain ET AL: "Pinocembrin: an antifungal compound secreted by leaf glands of eastern cottonwood", Phytopathology, 31 July 1982 (1982-07-31), pages 877-880, XP055088579, Retrieved from the Internet: URL:http://www.apsnet.org/publications/phy topathology/backissues/Documents/1982Artic les/Phyto72n07_877.PDF [retrieved on 2013-11-15]
- Lester A Lepidota ET AL: "ANTIMICROBIAL AGENTS FROM HIGHER PLANTS: PRENYLATED FLAVONOIDS AND OTHER PHENOLS FROM GLYCYRRHIZA", Phytochemistry, 1 January 1983 (1983-01-01), pages 573-516, XP055174604, Retrieved from the Internet: URL:http://ac.els-cdn.com/0031942283830490 /1-s2.0-0031942283830490-main.pdf?_tid=a18 35d2a-c412-11e4-980f-00000aacb361&acdnat=1 425654682_2ec98e22813dd6d3dc2d9a178d486bfa [retrieved on 2015-03-06]

## Description

The subject of the present invention is, in the most general aspect, the controlling of fungal and/or bacterial plant diseases in agriculture by the application of a storage stable extract of parts of the plant *Glycyrrhiza glabra.*

In particular the present invention relates to a a process for the production of storage stable extract of *Glycyrrhiza glabra* from plant components and to the use of the resulting extract of *Glycyrrhiza glabra* against plant pathogenic fungi and/or against plant pathogenic bacteria.

Fungal diseases are ubiquitously caused by many fungi belonging for example to the families phyla Oomycota, Ascomycota, Deuteromycotina (Mitosporic fungi, Funghi imperfecti) and Basidiomycota. These fungi belong to the major groups of fungi leading to disease problems, which result in huge economic losses. Synthetic fungicides are used frequently and in large quantities in order to control the diseases. However, this has a strong impact on the income of producers and the environment and is unacceptable for organic farming.

Research on applications of plant extracts for controlling fungal diseases and other disease vectors are common in agriculture (especially for organic production). The commercial product Milsana^{®}, produced from the extract of *Reynoutria sachalinensis,* is an example of a successful plant extract used especially in organic production, in order to control efficiently powdery mildews of horticultural and other crops in several countries. Products of plant extracts, highly effective against fungal diseases, however, are not well available in the market. Control of fungi in integrated and organic crop production is mainly based upon the use of copper-compounds (fungicides). In particular, when the disease is already established, copper is the only available product used in organic production for reducing the disease severity. However, copper has toxic impacts on the environment and therefore it has to be replaced urgently by other substances in the agricultural production. Due to the toxicity of copper, the European Union has kg/ha up to 2010 according to EEC Regulation 2092/91. Plant extracts with anti-fungal attributes constitute an alternative to copper use and they could be considered of great economical and ecological importance.

Hence, it is apparent that there still exists a need for applications which are highly effective against fungal diseases and which could be used in integrated and organic crop production. Therefore, it is an object of the present invention to satisfy such a need.Fukui et al. report on antimicrobial flavones isolated from the leaves of Glycyrrhiza glabra in Chem. Pharm. Bull, 1988, 36, 4174-4176.

Surprisingly, the applicant has discovered that a *Glycyrrhiza glabra* extract, derived from aboveground plant parts, preferably dried plant parts, can be used for controlling phytopathogenic fungi of plants, like crop plants, ornamentals etc. The sprayed extract (one or repeated application) reduces disease severity of plants efficiently (60-100% disease reduction) for a period of several weeks. The level of disease reduction depends on the extract concentration used and the infestation pressure.

Described herein is a process for the production of a storage stable extract of *Glycyrrhiza glabra* from aerial plant components, wherein
(a) the plant components are reduced to small pieces
(b) a solvent is added to the plant components reduced in size to extract the active ingredient (a.i.) from the plant components, wherein the solvent used is water and/or an organic solvent,
(c) the a.i. is enriched in the solvent (extraction) and
(d) the residual little a.i. containing plant components are seperated from the a.i. containing solvent.

The plant extract derived from *Glycyrrhiza glabra* acts as an anti-fungal extract and is appropriate for use in agricultural production.

The present disclosure has the advantage of controlling fungal diseases by applying a plant extract. In addition, the potential of copper replacement by new active substances, derived from plants, could be of great benefit for the agricultural production.

The term "plant components" from *Glycyrrhiza glabra* refers to parts of the plant especially the aboveground plant parts, for example the leaves. In particular the plant parts are dried (for example at room temperature).

The reduction in size is preferred conducted by grounding the plant components to a uniform powder. The extract is then produced from this powder.

The aerial plant components are preferably reduced to a size smaller than 1 mm, more preferable smaller than 0,1 mm. The reduction of the plant components can for example be carried out with an electric mill.

The plant components reduced in size, in particular the powder, are extracted with water and/or organic solvents. Preferably the organic solvent is a polar organic solvents. In particular the organic solvent is selected of the group consisting of ketones (like for example acetone, butanone), alcohols (like for example ethanol, methanol, propanol), esters (like for example ethylacetate) and halogenated hydrocarbons (like for example dichloromethane, chloroform). More preferably aqueous organic solvents (like for example aqueous acetone, aqueous dimethylsulfoxide, aqueous ethylacetate, aqueous alcohols, preferably aqueous ethanol) are used for the extraction.

According to the invention the plant components reduced in size are extracted with the 1- to 50-fold amount of water and/or water-organic solvent mixtures.

If an aqueous organic solvent is used according to the invention the volume ratio of the organic solvent to water is between 10:1 and 1:100, preferrably between 1:1 and 1:10, more preferrably approximately 1:4.

In particular the water and/or water-organic solvent mixtures added to the plant components reduced in size is of approximately 20° C.

According to a preferred embodiment of the invention the extraction with water and/or water-organic solvent mixtures is carried out for a period of approximately 1 to 20 hours, wherein the temperature of the system is raised gradually up to approximately 30 to 80° C. The extraction is carried out for example with the help of a soxhlet apparatus, by percolation or mazerisation.

Especially preferred is an embodiment of the present invention , wherein the aqueous solution is stirred at intervals of approximately 30 minutes and then it is left standing for about 1 to 3 hours for sedimentation.

According to another preferred embodiment of the invention the extraction with fresh water and/or water-organic solvent mixtures of the remaining residue (steps (b) and (c)) is repeated so long until about 90 % of the biological activity is present in the liquid phase. The term "biological activity" as used herein means the biological activity as a fungicide.

The initially derived extract can be concentrated and stored. A storage for 9 months at 4 °C slightly reduces effectiveness compared to a freshly prepared extract.Therefore, the a.i.-containing solvent can be concentrated by reducing to 1/2 to 1/20 of its volume subsequently to step (d). The desired concentration of the spray-solution can be adjusted by addition of water to the initially obtained extract. In particular the concentrated extract is diluted with water in a ratio between 1:5 and 1:200, in particular between 1:10 and 1:100, before the application.

The the a.i.- containing solvent can be formulated by the addition of emulsifiers, plant oil and/or water.

In addition, to formulate the extract a sticker or another appropriate plant protection additive (like for example Trifolio® S-forte) can be added before the application.

According to the present invention, the use of of an extract of *Glycyrrhiza glabra* against Oomycota is provided. The extract can also be used against plant pathogenic fungi, in particular against downy mildews of crops, and/or against plant pathogenic bacteria. The extract of *Glycyrrhiza glabra* can be used against all major groups of fungi leading to disease problems for example fungi belonging to phyla Oomycota, Ascomycota, Deuteromycotina (Mitosporic fungi, Funghi imperfecti) and Basidiomycota.

### Example 1: Effectiveness against downy mildew diseases

The above ground parts of *Glycyrrhiza glabra* were dried at room temperature, then ground in an electric mill up to the point that a uniform powder is formed. The extract is produced from for example 50 g powder by extraction with 1 L of aqueous ethanol for 5 hours with the aid of a Soxhlet apparatus.

The initial ethanolic extract is diluted in water in a ratio 1:5. The 1% (w/v) derived solution, which is also the sprayed product, contains: 1% (w/v) *Glycyrrhiza glabra,* 20% (v/v) ethanol and 80% (v/v) water. Prior to the spray any common sticker can be added to the solution in order to optimise the solution performance and achieve better results.

The *Glycyrrhiza glabra* extract was effective against downy mildew diseases. For example, it was effective against tomato and cucumber downy mildews, which are caused by the fungi *Phytophthora infestans* and *Pseudoperonospora cubensis* respectively. Indeed, the disease severity of the treated plants was exceptionally reduced compared to the untreated ones. The crop plants tolerate the sprays with the *Glycyrrhiza glabra* extract without adverse signs. Commercial production (formulated product) of the plant extract seems feasible on behalf of these results.

### Example 2: Effectiveness against Phytophthora infestants (late blight) on tomatoes

*Glycyrrhiza glabra* ethanolic extract 1% (w/v) was sprayed, once, every 14 and 20 days, on tomatoe plants. The applications started when the plants had developed in full the 5^{th} leaf and were made until "run off". Additionally a similar number of plants was sprayed with a) a mixture of ethanol and de-ionized water 1:1 (v/v) and b) the registered fungicide Fosetal® WP (400 g/100 1). The artificial inoculation of plants, with zoospore-sporangia suspension derived from *Phytophthora infestants* fungi, was made right after the first application of the solutions. Plants were kept in the glasshouse until disease severity assessment. Disease severity was initially assessed 7 days after the artificial inoculation and assessments were repeated every 2 to 3 days since then (11 times in total).

The results showed that downy mildew severity of tomato plants was reduced significantly by the plant extract (74%, 97% to 95% disease reduction) in all the application frequencies used (0, 14 and 20 days after inoculation), compared to the control plants. The level of the disease reduction was comparable with the one achieved by the applications of the commercial fungicide.

### Example 3 (comparative): Effectiveness against Uromyces appendiculatus (bean rust) on beans in the green house

### Trial 1:

### Extraction procedure

*Glycyrrhiza glabra* leaves were ground to a fine powder using an electric mill. 200g of powder were mixed with 2 L of 70 % ethanol/30 % water and digested for 2 hours at 60 °C. Subsequently the extract was filtered and stored at 4 °C.

### Treatment of plants

In a green house four plants per treatment were sprayed with 0; 0,2 and 1% (reffered to the dry matter of *Glycyrrhiza glabra* powder) aqueous solution. The digested extract is diluted in water and 0,2% Trifolio® S-forte (a registered plant protection additive; sticker and penetrator) is added. The 1% (g/v) derived solution contains 1% (w/v) *Glycyrrhiza glabra,* 7% (v/v) ethanol and 93% (v/v) water. The 0,2 % (g/v) derived solution contains: 0,2% (w/v) *Glycyrrhiza glabra,* 1,4 % (v/v) ethanol and 98,6% (v/v) water.

24 hours after treatment the plants were artificially infected with a spore suspension of bean rust containing 75 mg/l spores.

### Results

The degree of infestation of the plants was monitored for 3 weeks. The degree of infestation of the beans was 9% in the untreated control and 2,2 and 1,9% in the 0,2 and 1% treatment variant, respectively; this corresponds to an efficacy (according to Abbott) of 75 and 79%, respectively.

### Trial 2:

### Extraction procedure

*G. glabra* leaves were powdered and 200g plant material was extracted with 2L 96% ethanol for 10 hours in a Soxhlet apparatus (tempereature ca. 60 °C). The solvent was then evaporated in a rotary evaporator to appr. 200ml. This concentrate was re-dissolved in 96% ethanol, resulting in a total volume of 400 ml, equalling an extract concentration of 50%.The extract was stored in a refrigerator until use. Dilution for use in trials was done with de-ionised water.

### Treatment of plants

Three bean plants per tested extract concentration were sprayed until run-off with *G. glabra* extract (concentrations 0.31%, 0.63%, 1.25%, 2.5 and 5%). On the next day plants were inoculated with uredospores of *U. appendiculatus* at a concentration of 1mg/ml suspended in 0.0125% Tween 20. Plants were kept at 20°C over night in a humid chamber. Then plants were transferred to the greenhouse. After 14 days the number of sporulating pustules were counted on the upper leaf surface on 3 times 1 cm².

### Results

1. On the bean cultivar "Primula" treatment with 5% *G. glabra* extract resulted in 86.3% efficacy. On water-treated plants 9 pustules were counted per cm² for comparison. The efficacy after treatment with 0.63% *G. glabra* extract was 45%. All extract treatments were significantly different to the control.
2. In the cultivar "Hildora" application of 5% *G. glabra* extract resulted in 91.0% efficacy, application of 1.25% extract resulted in 59.6% efficacy (number of pustules in the control was ca. 13 per cm²). All extract concentrations except for 0.31% reduced the infection significantly compared to the control.

### Example 4 (comparative): Effectiveness against Sphaerotheca fuliginea (powdery mildew) on cucumber in the field

### Extraction procedure

*G. glabra* leaves were powdered and 200g plant material was extracted with 2L 96% ethanol for 10 hours in a Soxhlet apparatus (tempereature ca. 60°C). The solvent was then evaporated in a rotary evaporator to appr. 200ml. This concentrate was re-dissolved in 96% ethanol, resulting in a total volume of 400ml, equalling an extract concentration of 50%.The extract was stored in a refrigerator until use. Dilution for use in trials was done with de-ionised water.

### Treatment of plants

Cucumber plants were treated (spraying until run-off) threetimes every 14 days, started when the plants had 6 to 8 leaves and the first symptoms of powdery mildew (natural infection) could be seen. The plants were divided into 3 groups (12 plants each group): group 1 remained untreated; group 2 was treated with an aqueous solution (containing 0,2% Trifolio® S-forte) of 2% extract (reffered to the dry matter of *Glycyrrhiza glabra* powder) and group 3 was treated with 4% aqueous solution with 0,2% Trifolio® S-forte.

### Results

The degree of infestation was 55% in the untreated control and 19% in the group of the 2% treatment and 10% in the 4% treatment, respectively. These findings correspond to efficacies (according to Abbott) of 63 and 79%, resp.

### Example 5: Downy mildew on cucumbers (Pseudoperonospora cubensis)

### Extraction procedure

*G. glabra* leaves were powdered and 200g plant material was extracted with 2L 96% ethanol for 10 hours in a Soxhlet apparatus (temperature ca. 60°C). The solvent was then evaporated in a rotary evaporator to appr.

200ml. This concentrate was re-dissolved in 95% ethanol, resulting in a total volume of 400 ml, equalling an extract concentration of 50% of the dry matter.The extract was stored in a refrigerator until use. Dilution for use in trials was done with de-ionised water.

### Treatment of plants

### 1. Trials on potted plants

Four to eight cucumber plants per tested extract concentration were sprayed until run-off with *G. glabra* extract (concentrations 0.31%, 0.63%, 1.25%, 2.5% and 5%). On the next day plants were inoculated with sporangia of *P. cubensis* at a concentration of 5x10³ per ml, suspended in de-ionised water. Plants were kept at 15°C over night in a dark and humid chamber. Then plants were then transferred to a climate chamber. After 14 days the percentage of infected leaf area was evaluated.

### 2. Trial in polythene tunnel

Cucumber plants were grown in a polythene tunnel in four replicates, consisting of 4 plants per replicate. Plants were sprayed weekly with 5% *G. glabra* extract, and infection was done artificially once with a sporangia suspension of *P. cubensis.* Evaluation of the percentage of infected leaf area was carried out on 12 leaves per plant, on three plants per replicate. Disease rating started when first symptoms of downy mildew were visible. They took place weekly (totally 9 times).

### Results

### 1. Trials on potted plants

Treatment of cucumbers with 5% *G. glabra* extract resulted in 95.3% efficacy. The EC₅₀-value was 0.5, indicating that 0.5% extract concentration leads to 50% efficacy.

### 2. Trial in polythene tunnel

Treatment with 5% *G. glabra* extract kept infection with *P. cubensis* very low, resulting in an efficacy of 77.7% at the end of the trial. At that time, control plants showed an infection rate of 92%.

### Example 6 (comparative): Bacterial phytopathogens (Clavibacter michiganinsis and Xanthomonas hortorum)

### Extraction procedure (see example 5)

### In vitro assays

For assays with *Clavibacter michiganinsis,* tryptic soy agar, for assays with *Xanthomonas hortorum,* calcium carbonate agar was used. Ten Petri dishes per bacterium were inoculated with 100µl of bacterial suspensions, for each concentration. Then holes were made in the agar with a sterile cork borer. In each hole, 50µl of *G. glabra* extract (concentrations 0.31%, 0.63%, 1.25%, 2.5% and 5%) was applied. Dishes were stored at 28°C for two to five days. Then inhibition zones were measured.

### Results

1. Against *C*. *michiganensis,* all tested extract concentrations resulted in growth inhibition compared to the water control. Inhibition zones ranged from 7.9 cm (0.5% extract concentration) to 2.1 cm (0.31% extract concentration).
2. Against *X. hortorum,* extract concentrations of *G*. *glabra* of 5% down to 1.25% resulted in inhibition zones, ranging from 4.4 to 1.25 cm.
3. Water controls had no inhibition zones in all trials.

### Example 7 (comparative): Carrot, infested with Alternaria dauci and A. radicina

### Extraction procedure (see example 5)

### Seed treatment

Carrot seeds, infested with *A. dauci* and *A. radicina* were soaked and stirred in 10% *G. glabra* extract for 30 min. Then seeds were dried over night at room temperature. The next day, 3 x 100 seeds were sown in containers and emergence of seedlings was recorded after 19 days.

### Results

In a first trial, seed treatment with 10% *G. glabra* extract resulted in an increase of emerged healthy carrot seedlings from 15.7% in the control to 32.7% in extract treated seeds. At the same time, the percentage of infested emerged seedlings was reduced in comparison to the control. Although the total emergence is too low for application in practice, the results are promising and optimised extraction procedures of *G*. *glabra* may lead to enhanced efficacy.

## Claims

1. Use of a storage stable extract of *Glycyrrhiza glabra* from aerial plant components produced according to a process, wherein
(a) the plant components are reduced to small pieces,
(b) a solvent is added to the plant components reduced in size to extract the active ingredient (a.i.) from the plant components, wherein the solvent used is water and/or an organic solvent wherein the organic solvent is selected of the group consisting of ketones, alcohols, esters and halogenated hydrocarbons,
(c) the a.i. is enriched in the solvent (extraction) and
(d) the residual little a.i. containing plant components are seperated from the a.i. containing solvent,
against plant pathogenic fungi, in particular against downy mildews of crops,
wherein the plant pathogenic fungi is belonging to the family phyla Oomycota.

2. The use according to claim 1, wherein the plant components reduced in size are extracted with the 1- to 50-fold amount of water and/or water-organic solvent mixtures.

3. The use according to claim 2, wherein the water and/or water-organic solvent mixtures added to the plant components reduced in size is of approximately 20° C.

4. The use according to claim 2 or 3, wherein the extraction with water and/or water-organic solvent mixtures is carried out for a period of approx. 1 to 20 hours, wherein the temperature of the system is raised gradually up to approximately 30 to 80° C.

5. The use according to any of the claims 1 to 4, wherein the aqueous solution is stirred at intervals of approximately 30 minutes and then is left standing for about 1 to 3 hours for sedimentation.

6. The use according to any of the claims 1 to 5, wherein the volume ratio of the organic solvent to water is between 10:1 and 1:100, in particular approximately 1:4.

7. The use according to any of the claims 1 to 6, wherein subsequently to step (d) the a.i. containing solvent is concentrated by reducing to 1/2 to 1/20 of its volume.

8. The use according to claim 7, wherein the concentrated extract is adjusted by addition of water in a ratio between 1:5 and 1:200.

9. The use according to claim 7 or 8, wherein a sticker or another appropriate plant protection additive is added to formulate the a.i.

10. The use according to any of the claims 1 to 9, wherein the a.i.- containing solvent is formulated by addition of emulsifiers, plant oil and/or water.

11. The use according to any of the claims 1 to 10 against downy mildews of crops.

## Patentansprüche

1. Verwendung eines lagerstabilen Extrakts von *Glycyrrhiza glabra* aus oberirdischen Pflanzenteilen, welcher nach einem Verfahren hergestellt ist, bei dem
(a) die Pflanzenteile zerkleinert werden,
(b) den zerkleinerten Pflanzenteilen zur Extraktion des Wirkstoffes aus den Pflanzenteilen ein Lösungsmittel hinzugegeben wird, wobei das verwendete Lösungsmittel Wasser und/oder ein organisches Lösungsmittel ist, wobei das Lösungsmittel aus der Gruppe bestehend aus Ketonen, Alkoholen, Estern und halogenierten Kohlenwasserstoffen ausgewählt ist,
(c) der Wirkstoff in dem Lösungsmittel angereichert wird (Extraktion) und
(d) die zurückbleibenden, wenig Wirkstoff enthaltenden Pflanzenteile von dem wirkstoffhaltigen Lösungsmittel abgetrennt werden,
gegen pflanzenpathogenen Pilze, insbesondere gegen falschen Mehltau bei Kulturpflanzen,
wobei die pflanzenpathogenen Pilze zur Familie der Phyla Oomycota gehören.

2. Verwendung nach Anspruch 1, wobei die Extraktion aus den zerkleinerten Pflanzenteilen mit der 1- bis 50-fachen Menge an Wasser und/oder Gemischen aus Wasser und organischem Lösungsmittel erfolgt.

3. Verwendung nach Anspruch 2, wobei die Temperatur des den zerkleinerten Pflanzenteilen zugegebenen Wassers und/oder der Gemische aus Wasser und organischem Lösungsmittel ungefähr 20 °C beträgt.

4. Verwendung nach Anspruch 2 oder 3, wobei die Extraktion mit Wasser und/oder Gemischen aus Wasser und organischem Lösungsmittel für eine Dauer von ungefähr 1 bis 20 Stunden erfolgt, wobei die Temperatur des Systems allmählich auf ungefähr 30 bis 80 °C erhöht wird.

5. Verwendung nach einem der Ansprüche 1 bis 4, wobei die wässrige Lösung in Abständen von ungefähr 30 Minuten gerührt und anschließend zur Sedimentation für 1 bis 3 Stunden ruhen gelassen wird.

6. Verwendung nach einem der Ansprüche 1 bis 5, wobei das Volumenverhältnis von organischem Lösungsmittel zu Wasser zwischen 10 : 1 und 1 : 100, insbesondere ungefähr 1 : 4 beträgt.

7. Verwendung nach einem der Ansprüche 1 bis 6, wobei das wirkstoffhaltige Lösungsmittel im Anschluss an Schritt (d) durch Reduzieren auf 1/2 bis 1/20 seines Volumens konzentriert wird.

8. Verwendung nach Anspruch 7, wobei der konzentrierte Extrakt durch das Hinzugeben von Wasser in einem Verhältnis zwischen 1 : 5 und 1 : 200 eingestellt wird.

9. Verwendung nach Anspruch 7 oder 8, wobei ein Haftvermittler oder ein anderes geeignetes Pflanzenschutzadditiv zur Formulierung des Wirkstoffs hinzugegeben wird.

10. Verwendung nach einem der Ansprüche 1 bis 9, wobei das wirkstoffhaltige Lösungsmittel durch Hinzugabe von Emulgatoren, Pflanzenölen und/oder Wasser formuliert wird.

11. Verwendung nach einem der Ansprüche 1 bis 10 gegen falschen Mehltau bei Kulturpflanzen.

## Revendications

1. Usage d'un extrait stable au stockage de *Glycyrrhiza glabra* à partir de parties aériennes de plante, l'extrait étant produit selon un procédé dans lequel
(a) les parties de plante sont réduites en petits morceaux,
(b) du solvant est ajouté aux parties de plante pilées afin d'extraire l'ingrédient actif des parties de plante, le solvant utilisé étant de l'eau et/ou un solvant organique, le solvant organique étant sélectionné dans le groupe consistant en des cétones, des alcools, des esters et des hydrocarbures halogénés,
(c) l'ingrédient actif est enrichi dans le solvant (extraction) et
(d) les parties de plante résiduelles contenant peu d'ingrédient actif sont séparées du solvant contenant l'ingrédient actif,
contre des champignons pathogènes des plantes, notamment contre les mildious des cultures,
dans lequel le champignon pathogène des plantes appartient à la famille des phyla Oomycota.

2. Usage selon la revendication 1, dans lequel les parties de plante pliées sont extraites avec 1 à 50 fois la quantité d'eau et/ou de mélanges eau/solvant organique.

3. Usage selon la revendication 2, dans lequel l'eau et/ou les mélanges eau/solvant organique ajoutés aux parties de plante pliées a/ont une température d'environ 20 °C.

4. Usage selon la revendication 2 ou 3, dans lequel l'extraction avec de l'eau et/ou des mélanges eau/solvant organique est effectuée pour une durée d'environ 1 à 20 heures, la température du système étant graduellement augmentée à environ 30 à 80 °C.

5. Usage selon l'une quelconque des revendications 1 à 4, dans lequel la solution aqueuse est agitée à des intervalles d'environ 30 minutes et puis est laissée reposer pour 1 à 3 heures en vue de la sédimentation.

6. Usage selon l'une quelconque des revendications 1 à 5, dans lequel le rapport de volume du solvant organique à l'eau est compris entre 10 : 1 et 1 : 100, notamment environ 1 : 4.

7. Usage selon l'une quelconque des revendications 1 à 6, dans lequel suite à l'étape (d) le solvant contenant l'ingrédient actif est concentré en le réduisant à 1/2 à 1/20 de son volume.

8. Usage selon la revendication 7, dans lequel l'extrait concentré est ajusté par l'addition de l'eau en un rapport compris entre 1 : 5 et 1 : 200.

9. Usage selon la revendication 7 ou 8, dans lequel un adhésif ou un autre additif de protection de plantes approprié est ajouté afin de formuler l'ingrédient actif.

10. Usage selon l'une quelconque des revendications 1 à 9, dans lequel le solvant contenant l'ingrédient actif est formulé par l'addition des émulsifiants, de l'huile végétale et/ou de l'eau.

11. Usage selon l'une quelconque des revendications 1 à 10 contre les mildious des cultures.
